# EUROPÄISCHE PATENTANMELDUNG

(11) **EP 4 119 706 A1**
(43) Veröffentlichungstag der Anmeldung: **18.01.2023**
(21) Anmeldenummer: 22183404.7
(22) Anmeldetag: 06.07.2022
(51) Int. Cl.: D01H 13/32, B65H 63/00

(54) **SPINN- ODER SPULMASCHINE SOWIE VERFAHREN ZUM BETREIBEN EINER SPINN- ODER SPULMASCHINE**

(30) Priorität: 14.07.2021 DE 102021118258
(71) Anmelder: Maschinenfabrik Rieter AG, 8406 Winterthur (CH)
(72) Erfinder: Widner, Harald, 85051 Ingolstadt (DE); Haunschild, Helmut, 92345 Dietfurt (DE)
(74) Vertreter: Canzler & Bergmeier Patentanwälte Partnerschaft mbB

(57) **Zusammenfassung**

Eine Spinn- oder Spulmaschine (1) weist eine Vielzahl nebeneinander angeordneter Arbeitsstellen (2) auf, welche als zumindest teilautarke Arbeitsstellen (2) ausgebildet sind, die nach Bereitstellung eines Fadenendes einen Fadenverbindungsvorgang selbstständig durchführen können und die jeweils wenigstens ein arbeitsstelleneigenes, mittels eines Einzelantriebs (16) aus einer ersten Endlage (I) in eine zweite Endlage (II) überführbares oder drehbar und/oder oszillierend antreibbares Arbeitsorgan zur Handhabung eines Fasermaterials (7) aufweisen. Die Spinn- oder Spulmaschine (1) weist einen Messkopf (13) mit wenigstens einem Sensor (14) auf, welcher einer zu überprüfenden Arbeitsstelle (2) zustellbar ist und mittels welchem das Erreichen wenigstens einer der beiden Endlagen (I, II) oder eine Drehzahl und/oder eine Geschwindigkeit und/oder eine Beschleunigung des wenigstens einen Arbeitsorgans der zu überprüfenden Arbeitsstelle (2) detektierbar oder messbar ist, wobei der Messkopf (13) in einem entlang der Arbeitsstellen (2) verfahrbaren Servicewagen (12) angeordnet ist. Bei einem entsprechenden Verfahren wird eine Drehzahl und/oder eine Geschwindigkeit und/oder eine Beschleunigung und/oder das Erreichen wenigstens einer der beiden Endlagen (I, II) des wenigstens einen Arbeitsorgans mittels eines entlang der Arbeitsstellen (2) verfahrbaren Servicewagens (12) überprüft wird, wobei dem wenigsten einen Arbeitsorgan ein Messkopf (13) des Servicewagens (12) mit einem Sensor (14) zugestellt wird.

## Beschreibung

Die vorliegende Erfindung betrifft eine Spinn- oder Spulmaschine mit einer Vielzahl nebeneinander angeordneter Arbeitsstellen, wobei die Arbeitsstellen als zumindest teilautarke Arbeitsstellen ausgebildet sind, welche zumindest nach Bereitstellung eines Fadenendes einen Fadenverbindungsvorgang selbstständig durchführen können und welche jeweils wenigstens ein arbeitsstelleneigenes, mittels eines Einzelantriebs aus einer ersten Endlage in eine zweite Endlage überführbares oder mittels eines Einzelantriebs drehbar und/oder oszillierend antreibbares Arbeitsorgan zur Handhabung eines Fasermaterials aufweisen. Weiterhin betrifft die Erfindung ein entsprechendes Verfahren zum Betreiben einer Spinn- oder Spulmaschine.

Spinn- oder Spulmaschinen sind im Stand der Technik in verschiedenen Ausführungen bekannt geworden. Bei all diesen Maschinen ist es erforderlich, Vorkehrungen zu treffen, um ein einwandfreies Funktionieren der Maschinen, deren Arbeitsstellen und oder einzelner Arbeitsorgane der Arbeitsstellen zu gewährleisten. Ebenso ist es erforderlich, Sicherheitsaspekten Rechnung zu tragen, beispielsweise also Bedienpersonal vor schnell rotierenden Bauteilen zu schützen.

In der DE 10 2015 111 673 A1 wird ausgeführt, dass aus Sicherheitsgründen das Rotorgehäuse einer Arbeitsstelle einer Rotorspinnmaschine erst dann geöffnet werden darf, wenn der Rotor auf eine bestimmte Geschwindigkeit abgebremst wurde. Weiterhin wird beschrieben, dass beim Hochlaufen das ordnungsgemäße Verschließen des Rotorgehäuses sicherzustellen ist, da einerseits sonst kein Garn gesponnen werden kann und andererseits Gefahr für das Bedienpersonal besteht. Die Schrift beschreibt hierzu, dass der Deckel des Rotorgehäuses verriegelt wird, solange der Rotor über einer vorbestimmten Mindestgeschwindigkeit läuft. Es wird weiterhin beschrieben, dass möglichst alle verwendeten Sensortechnologien redundant eingesetzt werden sollen. Nähere Angaben dazu, auf welche Weise erfasst wird, ob das Rotorgehäuse geöffnet oder geschlossen ist, werden jedoch nicht gemacht.

Moderne Spinn- oder Spulmaschinen weisen zumindest teilautarke Arbeitsstellen auf, die nach einer Unterbrechung der Produktion einen Fadenverbindungsvorgang selbständig durchführen können. Aus der DE 10 2015 118 987 A1 ist eine solche Spinnmaschine bekannt. Die Arbeitsstellen weisen eine vollautomatische Anspinnvorrichtung auf, sodass bei einer Unterbrechung des Produktionsprozesses das spulenseitige Fadenende lediglich an der Arbeitsstelle bereitgestellt werden muss. Dies kann manuell durch eine Bedienperson, durch einen Bedienroboter oder auch durch Einrichtungen der Arbeitsstelle erfolgen. Sämtliche weiteren Schritte des Anspinnvorgangs können jedoch durch die Arbeitsstelle selbst durchgeführt werden. Zur Handhabung eines Fasermaterials, also eines Faserbandes oder eines Fadens, weisen die Arbeitsstellen verschiedene Arbeitsorgane auf, von denen zumindest einige einzeln angetrieben sind.

Die EP 3 576 287 A1 beschreibt eine Spinnmaschine mit einzeln drehbar oder oszilllierend oder zwischen zwei verschiedenen Positionen verfahrbar angetriebenen Arbeitsorganen. Es wird dort vorgeschlagen, die Endlagen von bewegbaren Bauteilen durch eine Veränderung einer Lastgröße eines Antriebs des bewegbaren Bauteils zu erkennen. Beispielsweise steigt bei einer mittels eines Schrittmotors angetriebenen Saugdüse der Lastwinkel des Schrittmotors an, sobald die Saugdüse die Oberfläche der Spule kontaktiert. Dies kann detektiert werden und zur Steuerung des Schrittmotors verwendet werden. Es können so jedoch nur Endlagen bzw. Positionen erkannt werden, die durch einen Anschlag begrenzt sind. Sonstige Störungen oder Fehlpositionierungen der Arbeitsorgane können nicht erkannt werden. Es kann lediglich registriert werden, dass ein Ansetzprozess fehlgeschlagen ist oder die Garnqualität unzureichend ist.

Aufgabe der vorliegenden Erfindung ist es daher, eine Spinn- oder Spulmaschine sowie ein Verfahren vorzuschlagen, mittels welchen Störungen oder Fehlfunktionen von Arbeitsorganen erkannt werden können.

Die Aufgabe wird gelöst durch eine Spinn- oder Spulmaschine sowie ein Verfahren mit den Merkmalen der unabhängigen Patentansprüche.

Vorgeschlagen wird eine Spinn- oder Spulmaschine mit einer Vielzahl nebeneinander angeordneter Arbeitsstellen, welche als zumindest teilautarke Arbeitsstellen ausgebildet sind, welche zumindest nach Bereitstellung eines Fadenendes einen Fadenverbindungsvorgang selbstständig durchführen können und welche jeweils wenigstens ein arbeitsstelleneigenes, mittels eines Einzelantriebs aus einer ersten Endlage in eine zweite Endlage überführbares Arbeitsorgan zur Handhabung eines Fasermaterials aufweisen. Die Spinn- oder Spulmaschine weist einen Messkopf mit einem Sensor auf, welcher einer zu überprüfenden Arbeitsstelle zustellbar ist und mittels welchem das Erreichen wenigstens einer der beiden Endlagen des wenigstens einen Arbeitsorgans der zu überprüfenden Arbeitsstelle detektierbar ist. Dabei ist der Messkopf in einem entlang der Arbeitsstellen verfahrbaren Servicewagen angeordnet.

Ebenso wird bei einem Verfahren zum Betreiben einer solchen Spinn- oder Spulmaschine vorgeschlagen, dass das Erreichen wenigstens einer der beiden Endlagen des Arbeitsorgans einer zu überprüfenden Arbeitsstelle mittels eines entlang der Arbeitsstellen verfahrbaren Servicewagens überprüft wird. Dabei wird dem wenigsten einen Arbeitsorgan der zu überprüfenden Arbeitsstelle ein Messkopf des Servicewagens mit einem Sensor zugestellt.

Wie eingangs beschrieben, sind moderne Spinn- oder Spulmaschinen mit zumindest teilautarken Arbeitsstellen in der Lage, mittels arbeitsstelleneigener Arbeitsorgane ein Fasermaterial, insbesondere einen Faden, zu produzieren, zu handhaben und einen Fadenverbindungsvorgang selbstständig durchzuführen. Unter einem Fadenverbindungsvorgang wird im Rahmen der vorliegenden Anmeldung sowohl ein Anspinnvorgang an einer Spinnmaschine als auch ein Spleissvorgang an einer Spinn- oder Spulmaschine verstanden. Durch Störungen und Fehlfunktionen an den Arbeitsorganen kann es aber dennoch zu Problemen mit der Qualität des Fasermaterials sowie zu Stillstandszeiten mit Produktionsausfällen und einer entsprechenden Abnahme der Produktivität kommen.

Mittels des Servicewagens mit dem Messkopf können nun regelmäßig oder nach einer bestimmten Betriebsdauer Kontrollmessungen an einem Arbeitsorgan einer zu überprüfenden Arbeitsstelle durchgeführt werden und dadurch erkannt werden, ob das betreffende Arbeitsorgan seine für ein einwandfreies Funktionieren erforderliche Endlage überhaupt erreicht. Der verfahrbare Servicewagen und die Arbeitsstellen der Spinn- oder Spulmaschine sind in der Regel über ein Schienensystem oder eine sonstige Führung genau zueinander positioniert. Durch Positionieren des Servicewagens an einer zu überprüfenden Arbeitsstelle wird daher auch der Messkopf exakt und wiederholgenau an der zu überprüfenden Arbeitsstelle positioniert. Die zu überprüfende Arbeitsstelle ist dabei eine Arbeitsstelle aus der Vielzahl an Arbeitsstellen.

Beispielsweise ist es bei manchen Arbeitsorganen erforderlich, dass diese einen Faden in einer bestimmten Position als erste Endlage aufnehmen und in einer zweiten bestimmten Position als zweite Endlage wieder abgeben. Hierzu wird bei Inbetriebnahme der Arbeitsstelle das betreffende Arbeitsorgan bzw. der betreffende Einzelantrieb entsprechend eingerichtet. Aufgrund von Verschleiß, Temperaturänderungen, Schrittfehlern von Schrittmotoren und weiteren Einflüssen kann es jedoch insbesondere nach längerer Betriebsdauer dazu kommen, dass die eigentlich vorgesehenen Endlagen gar nicht erreicht werden oder das Arbeitsorgan über die eigentlich vorgesehene Endlage hinausbewegt wird. Die Fadenaufnahme oder die Fadenabgabe scheitert deshalb relativ häufig, jedoch ohne dass von der Spinnmaschine die Ursache hierfür erkannt werden kann. Mittels des Messkopfes des Servicewagens können derartige Fehlfunktionen nun frühzeitig erkannt werden.

Es können somit auch frühzeitig Abhilfemaßnahmen eingeleitet werden und Stillstandszeiten vermieden werden. Derartige Kontrollmessungen können in regelmäßigen Zeitabständen an den einzelnen Arbeitsstellen durchgeführt werden. Ebenso können Kontrollmessungen aufgrund bestimmter Ereignisse an den Arbeitsstellen wie beispielsweise einem gescheiterten Ansetzversuch durchgeführt werden. Besonders vorteilhaft dabei ist es weiterhin, dass der Messkopf mit dem Sensor entlang der Arbeitsstellen verfahrbar ist und somit nicht an jeder einzelnen Spinnstelle vorgesehen werden muss. Die Spinn- oder Spulmaschine kann hierdurch kostengünstig ausgeführt werden.

Dieselben Vorteile kommen auch bei einer alternativen Ausführung einer Spinn- oder Spulmaschine sowie einer alternativen Ausführung des Verfahrens zum Tragen.

Bei der alternativ vorgeschlagenen Spinn- oder Spulmaschine sind die Arbeitsstellen als zumindest teilautarke Arbeitsstellen ausgebildet, welche nach Bereitstellung eines Fadenendes einen Fadenverbindungsvorgang selbstständig durchführen können und jeweils wenigstens ein arbeitsstelleneigenes, mittels eines Einzelantriebs drehbar und/oder oszillierend antreibbares Arbeitsorgan zur Handhabung eines Fasermaterials aufweisen. Die Spinn- oder Spulmaschine weist einen Messkopf mit einem Sensor auf, welcher einer zu überprüfenden Arbeitsstelle zustellbar ist und mittels welchem eine Drehzahl und/oder eine Geschwindigkeit und/oder eine Beschleunigung des wenigstens einen Arbeitsorgans der zu überprüfenden Arbeitsstelle messbar ist. Dabei ist der Messkopf in einem entlang der Arbeitsstellen verfahrbaren Servicewagen angeordnet.

Bei dem entsprechenden, alternativen Verfahren zum Betreiben einer Spinn-oder Spulmaschine wird vorgeschlagene, dass eine Drehzahl und/oder eine Geschwindigkeit und/oder eine Beschleunigung des wenigstens einen Arbeitsorgans einer zu überprüfenden Arbeitsstelle gemessen wird, wobei dem wenigsten einen Arbeitsorgan der zu überprüfenden Arbeitsstelle ein Messkopf des Servicewagens mit einem Sensor zugestellt wird.

Mittels des Servicewagens mit dem Messkopf können nun regelmäßig oder nach einer bestimmten Betriebsdauer Kontrollmessungen an einem Arbeitsorgan einer zu überprüfenden Arbeitsstelle durchgeführt werden und dadurch erkannt werden, ob das Arbeitsorgan seine für ein einwandfreies Funktionieren erforderliche Geschwindigkeit oder Beschleunigung erreicht. Die zu überprüfende Arbeitsstelle ist dabei eine Arbeitsstelle aus der Vielzahl an Arbeitsstellen. Die Messungen können an dem Arbeitsorgan selbst oder auch an dem das Arbeitsorgan antreibenden Einzelantrieb vorgenommen werden.

Beispielsweise ist es bei manchen Arbeitsorganen erforderlich, dass während eines Fadenverbindungsvorgangs gesteuert und in Abstimmung mit weiteren Arbeitsorganen der Arbeitsstelle angetrieben werden. Ebenso ist es während des regulären Produktionsbetrieb meist erforderlich, mehrere Arbeitsorgane aufeinander abgestimmt anzutreiben. Hierzu wird der Antrieb des jeweiligen Arbeitsorgans durch eine Steuereinheit der Spinn- oder Spulmaschine entsprechend angesteuert. Auch hier kann es jedoch aufgrund verschiedener Einflüsse wie beispielsweise Verschleiß, Temperatur oder auch Bauteiltoleranzen dazu kommen, dass die eigentlich vorgesehenen Geschwindigkeiten, Drehzahlen oder Beschleunigungen nicht erreicht oder überschritten werden. Es kann deshalb zu einem Scheitern von Ansetzvorgängen und/oder Problemen mit der Garnqualität kommen, jedoch ohne dass von der Spinnmaschinen die Ursache hierfür erkannt werden kann.

Auch dies kann nun durch Kontrollmessungen mittels des Messkopfes des Servicewagens frühzeitig erkannt werden und es können frühzeitig Abhilfemaßnahmen eingeleitet werden. Die Kontrollmessungen können auch hier in regelmäßigen Zeitabständen oder aufgrund bestimmter Ereignisse wie einem gescheiterten Ansetzversuch oder der Detektion einer Bestimmten Anzahl von Garnfehlern innerhalb einer bestimmten Zeitspanne erfolgen.

Das Zustellen des Messkopfes des Servicewagens an das wenigstens eine Arbeitsorgan der zu überprüfenden Arbeitsstelle kann dabei bei beiden Ausführungen im einfachsten Fall dadurch erfolgen, dass der Servicewagen mit dem Messkopf gegenüber der zu überprüfenden Arbeitsstelle positioniert wird. Der Messkopf kann in diesem Fall auch unbeweglich innerhalb des Servicewagens angeordnet sein. Eine derartige Ausführung ist insbesondere dann vorteilhaft, wenn der Messkopf einen optischen Sensor beinhaltet, welcher ein Lichtsignal erfasst und/oder verarbeitet.

Nach einer anderen Ausführung des Verfahrens wird der Messkopf zum Zustellen an das wenigstens eine Arbeitsorgan aus einer Ruheposition in eine Messposition überführt. Bei der Spinn- oder Spulmaschine ist der Messkopf hierzu beweglich an dem Servicewagen angeordnet und aus einer Ruheposition in eine Messposition überführbar. Dies ist insbesondere dann vorteilhaft, wenn der Messkopf mit dem Sensor das wenigstens eine Arbeitsorgan zur Messung kontaktiert oder für die Messung eine ganz bestimmte Stellung gegenüber dem zu überprüfenden Arbeitsaufgaben aufweisen muss.

Vorteilhaft ist es zudem, wenn der Messkopf nacheinander verschiedenartigen Arbeitsorganen der zu überprüfenden Arbeitsstelle(n) zugestellt wird bzw. bei der Spinn- oder Spulmaschine verschiedenartigen Arbeitsorganen der zu überprüfenden Arbeitsstelle(n) zustellbar ist. Es ist hierdurch möglich, mittels eines einzigen Messkopfes mehrere Arbeitsorgane zu überprüfen. Dies kann während eines einzigen Prüfzyklus erfolgen, bei dem mehrere Arbeitsorgane einer Arbeitsstelle nacheinander überprüft werden. Alternativ können auch während einer ersten Kontrollfahrt die Arbeitsorgane eines ersten Typs an mehreren Arbeitsstellen überprüft werden und während einer zweiten Kontrollfahrt die Arbeitsorgane eines zweiten Typs. Der Messkopf kann hierzu auch mehrere Sensoren für verschiedene Arbeitsorgane aufweisen.

Vorteile bringt es mit sich, wenn die Spinn- oder Spulmaschine eine Auswerteeinheit zur Auswertung von Messwerten des Messkopfes aufweist. Bei dem Verfahren ist es entsprechend vorteilhaft, wenn Messwerte des Messkopfes in einer Auswerteeinheit der Spinn- oder Spulmaschine ausgewertet werden. Die Auswerteeinheit kann in dem verfahrbaren Servicewagen oder direkt in der Spinn- oder Spulmaschine oder an einer einzelnen Arbeitsstelle angeordnet sein. Mittels der Auswerteeinheit können die Messwerte des Messkopfes entweder mit einem vorgegebenen Referenzwert oder mit einem früheren Messwert verglichen werden. Dabei kann auch eine zulässige Abweichung von dem Referenzwert oder einem früheren Messwert vorgegeben werden. Bei Überschreiten kann eine Fehlermeldung ausgegeben werden. Es ist allerdings auch denkbar, dass die auf diese Weise festgestellte Störung direkt durch eine entsprechende Einheit des Servicewagens beseitigt wird.

Die Auswerteeinheit ist bevorzugt direkt mit einer Steuereinheit des Servicewagens und/oder der Spinn- oder Spulmaschine und/oder der einzelnen Arbeitsstelle verbunden. Die Steuereinheit kann bei Detektion einer Fehlfunktion durch die Auswerteeinheit beispielsweise die Produktion unterbrechen und ein Störungssignal ausgeben. Alternativ kann die Steuereinheit auch die automatische Behebung einer Fehlfunktion veranlassen.

Vorteile bringt es zudem mit sich, wenn die Arbeitsstelle als vollautarke Arbeitsstelle einer Spinnmaschine ausgebildet ist und zumindest eine einzeln angetriebene Zuführvorrichtung für ein Fasermaterial, eine einzeln antreibbare und/oder einzeln betätigbare Spinneinheit, eine einzeln antreibbare Abzugsvorrichtung für einen gesponnenen Faden sowie eine einzeln antreibbare Spulvorrichtung aufweist. An einer derartigen Spinn- oder Spulmaschine mit vollautarken Arbeitsstellen kann der Messkopf mit dem Sensor besonders vorteilhaft eingesetzt werden.

Vorteilhaft ist es, wenn das Arbeitsorgan der zu überprüfenden Arbeitsstelle ein Deckelelement, insbesondere ein Deckelelement einer Spinneinheit, ist, welches aus einer geschlossenen Stellung in eine geöffnete Stellung überführbar ist, wobei mittels des Sensors das Erreichen wenigstens der geschlossenen Stellung detektierbar ist. Somit ist in diesem Fall die geschlossene Stellung die wenigstens eine Endlage. Mittels des Servicewagens mit dem Messkopf kann überprüft werden, ob das Deckelelement sich nach dem Schließen tatsächlich in der vollständig geschlossenen Stellung befindet. Ist an der Arbeitsstelle ein Sensor vorhanden, welcher das Schließen des Deckelelements detektieren soll, so ist es auch möglich, mittels des Messkopfes den Sensor der Arbeitsstelle zu überprüfen.

Vorteile bringt es mit sich, wenn das Arbeitsorgan ein oszillierend zwischen zwei Endlagen bewegbarer Fadenführer, insbesondere eine Garnführung einer Garnüberwachungseinrichtung oder ein Verlegefadenführer einer Fadenverlegeeinrichtung, ist. Hier kann es aufgrund verschiedener Einflüsse dazu kommen, dass die eigentlich vorgesehenen Endlagen nicht erreicht werden. Im Falle eines Verlegefadenführers einer Fadenverlegeeinrichtung kann es hierdurch zu einem fehlerhaften Spulenaufbau kommen. Diese Probleme können nun vermieden werden, indem mittels des Servicewagens das exakte Erreichen der Endlagen überprüft wird.

Ebenso ist es vorteilhaft, wenn das Arbeitsorgan ein schwenkbar an der Arbeitsstelle angeordneter Fadenzubringer ist, welcher aus einer Fadenaufnahmestellung in eine Fadenübergabestellung überführbar ist. Mittels des Messkopfes des Servicewagens kann nun überprüft werden, ob der Fadenzubringer die korrekte Fadenaufnahmestellung und/oder die korrekte Fadenübergabestellung tatsächlich erreicht und hierdurch das korrekte Handling des Fadens bzw. des Fasermaterials sicherstellen kann.

Vorteile bringt es bei der Spinn- oder Spulmaschine zudem mit sich, wenn der Sensor als Abstandssensor ausgebildet ist. Mittels eines solchen Sensors kann die Position von Arbeitsorganen in günstiger Weise überprüft werden. Wird beispielsweise bei der Überprüfung der Arbeitsstelle ein im Vergleich zu einem Referenzwert zu geringer Abstand zu einem Deckelelement gemessen, so kann daraus geschlossen werden, dass das Deckelelement nicht vollständig geschlossen ist. Dabei können in vorteilhafter Weise mittels eines Abstandsensors auch mehrere Arbeitsorgane überprüft werden.

Ebenfalls vorteilhaft ist es, wenn der Sensor als Näherungsschalter, insbesondere als induktiver oder kapazitiver Näherungsschalter, ausgebildet ist. Mittels eines solchen Näherungsschalters kann das korrekte Erreichen einer Endlage in besonders einfacher Weise überprüft werden.

Nach einer anderen Ausführung der Spinn- oder Spulmaschine ist es vorteilhaft, wenn das Arbeitsorgan eine Speisewalze ist. Bei Spinn- oder Spulmaschinen mit einzelnen angetriebenen Speisewalzen ist in der Regel keine genaue Drehzahlerfassung durch Auswertung von Lastgrößen der Antriebe möglich. Durch Messung der Drehzahl der Speisewalze während eines Ansatzvorganges mittels des Messkopfes kann nun genau überprüft werden, welche Drehzahl durch die Speisewalze erreicht wird und welche Fasermenge hierdurch eingespeist wird.

Ebenso bringt es Vorteile mit sich, wenn das Arbeitsorgan eine Abzugswalze einer Abzugsvorrichtung ist. Bei einem Fadenverbindungsvorgang ist es besonders wichtig, dass eine solche Abzugswalze gesteuert in Abstimmung mit weiteren Antrieben der Arbeitsstelle beschleunigt wird und ihre Betriebsdrehzahl erreicht. Ebenso ist es im regulären Betrieb wichtig, dass die Abzugswalze eine bestimmte Drehzahl in Relation zur Rotordrehzahl aufweist. Mit dem Messkopf kann nun die Drehzahl der Abzugswalze genau gemessen werden und eventuelle Abweichungen von der Solldrehzahl können detektiert werden.

Entsprechend ist es auch vorteilhaft, wenn das Arbeitsorgan ein Spinnrotor ist. Auch die Drehzahl der Spinnrotors kann bei herkömmlichen Spinn- oder Spulmaschinen nicht genau gemessen werden und die Auswertung von Daten des Antriebs ist häufig zu ungenau. Hier kann nach Positionieren des Servicewagens mit dem Messkopf der Spinnrotor auf seine Betriebsdrehzahl gebracht werden und dabei sowohl die Beschleunigung als auch die erreichte Betriebsdrehzahl genau erfasst werden. Entsprechend bringt es bei der Spinn- oder Spulmaschine Vorteile mit sich, wenn der wenigstens eine Sensor ein Drehgeber ist.

Dabei ist es vorteilhaft, wenn der Sensor ein dem wenigstens einen Arbeitsorgan zustellbares Reibrad beinhaltet. Über ein solches Reibrad kann dann in an sich bekannter Weise beispielsweise mittels eines Inkremental-Encoders die Drehzahl des Arbeitsorgans direkt gemessen werden.

Alternativ kann der Sensor jedoch auch beispielsweise einen magnetischen Impulsgeber beinhalten. Dabei kann die Drehzahl des Arbeitsorgans nicht nur direkt, sondern auch indirekt erfasst werden, indem die Drehzahl des dem Arbeitsorgan zugeordneten Einzelantriebs gemessen wird.

Ebenfalls vorteilhaft ist es, wenn der Sensor ein optischer Sensor ist. Ein optischer Sensor ist je nach Ausführung entweder zur Abstandsmessung oder auch zur Drehzahlmessung geeignet und kann somit bei beiden Ausführungen der Spinn- oder Spulmaschine bzw. bei beiden Verfahren vorteilhaft eingesetzt werden.

Besonders vorteilhaft ist es weiterhin, wenn der Sensor eine Lichtquelle, insbesondere einen Laserstrahl beinhaltet. Hierdurch ist eine besonders genaue Messung sowohl von Entfernungen als auch von Drehzahlen möglich. Insbesondere ist es mittels eines Laserstrahls möglich, bestimmte Merkmale rotierender Arbeitsorgane wie beispielsweise Riffelungen einer Walze zu detektieren und hierdurch die Drehzahl zu messen. Besondere Vorkehrungen an dem Arbeitsorgan sind hierdurch nicht erforderlich, sodass die Messung mittels eines solchen Laserstrahls in besonders einfacher Weise erfolgen kann.

Weitere Vorteile der Erfindung sind in den nachfolgenden Ausführungsbeispielen beschrieben. Es zeigen, jeweils schematisch:
- **Figur 1**: eine Spinn- oder Spulmaschine in einer Vorderansicht,
- **Figur 2**: eine Arbeitsstelle einer Spinn- oder Spulmaschine in einer Seitenansicht während des regulären Betriebs,
- **Figur 3**: eine Arbeitsstelle einer Spinn- oder Spulmaschine in einer Seitenansicht während einer Überprüfung der Arbeitsstelle,
- **Figur 4**: eine Spulvorrichtung in einer Vorderansicht während des regulären Betriebs,
- **Figur 5**: eine Spulvorrichtung in einer Vorderansicht während einer Überprüfung der Arbeitsstelle,
- **Figur 6**: eine Garnüberwachungseinrichtung in einer Vorderansicht während des regulären Betriebs,
- **Figur 7**: eine Garnüberwachungseinrichtung in einer Vorderansicht während einer Überprüfung der Arbeitsstelle,
- **Figur 8**: eine Arbeitsstelle einer Spinn- oder Spulmaschine mit einem Fadenzubringer in einer Fadenaufnahmestellung in einer Seitenansicht,
- **Figur 9**: eine Arbeitsstelle einer Spinn- oder Spulmaschine mit einem Fadenzubringer in einer Fadenübergabestellung während einer Überprüfung der Arbeitsstelle in einer Seitenansicht,
- **Figur 10**: ein Arbeitsorgan einer Arbeitsstelle einer Spinn- oder Spulmaschine mit einem daran zugestellten Messkopf.

Bei der nachfolgenden Beschreibung der Ausführungsbeispiele werden identische oder in ihrer Gestaltung und/oder Wirkweise zumindest vergleichbare Merkmale mit gleichen Bezugszeichen versehen. Weiterhin werden diese lediglich bei ihrer erstmaligen Erwähnung detailliert erläutert, während bei den folgenden Ausführungsbeispielen lediglich auf die Unterschiede zu den bereits beschriebenen Ausführungsbeispielen eingegangen wird. Weiterhin sind aus Gründen der Übersichtlichkeit von mehreren identischen Bauteilen bzw. Merkmalen oftmals nur eines oder nur einige wenige beschriftet.

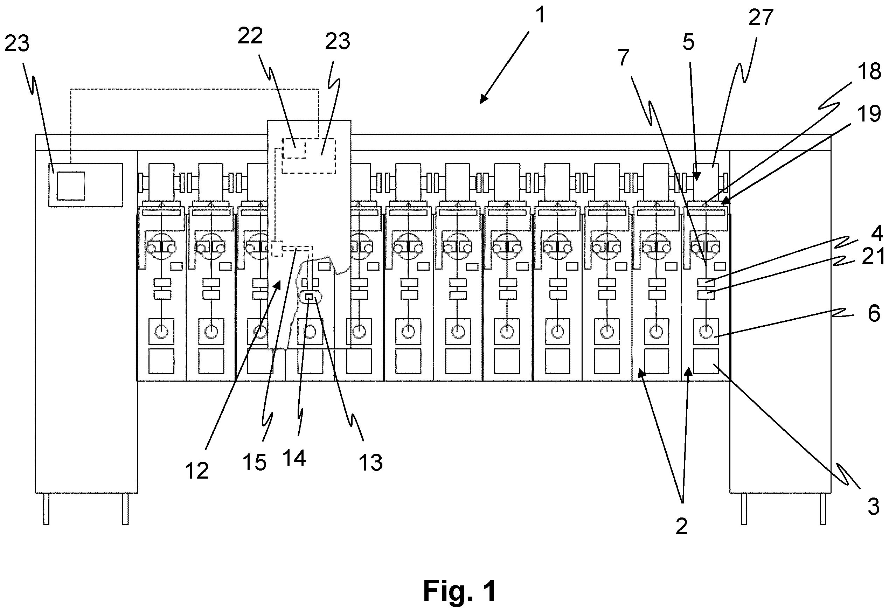

Figur 1 zeigt eine Spinn- oder Spulmaschine 1 mit in einer schematischen Vorderansicht. Die Spinn- oder Spulmaschine 1 ist vorliegend als Spinnmaschine ausgebildet und weist in an sich bekannter Weise eine Vielzahl nebeneinander angeordneter Arbeitsstellen 2 auf. Jede der Arbeitsstellen 2 weist eine Vielzahl an Arbeitsorganen zur Handhabung eines Fasermaterials 7, welches ein Faserband oder ein Faden sein kann, auf.

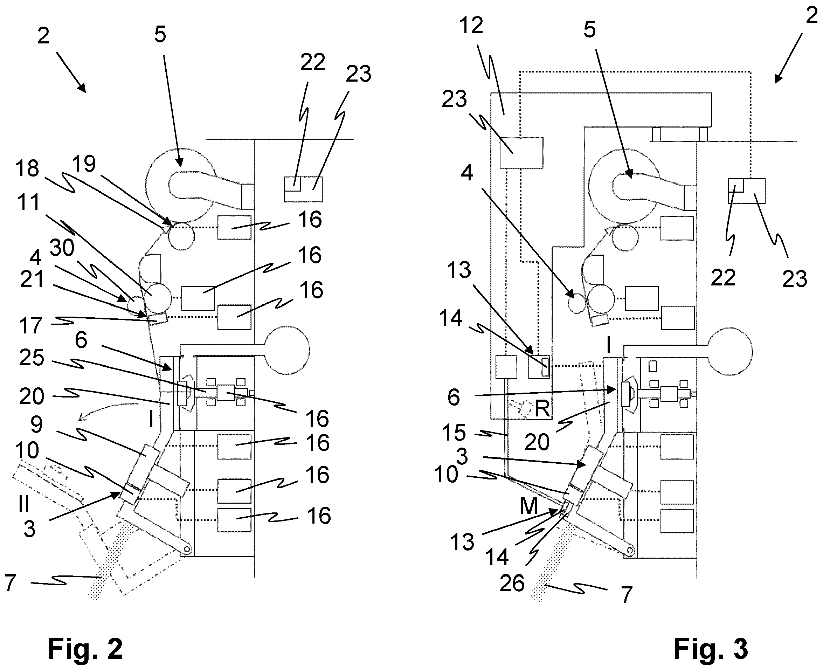

Beispielsweise weist jede der Arbeitsstellen 2 als Arbeitsorgane eine Zuführvorrichtung 3 auf, welche im Falle einer Spinnmaschine beispielsweise eine Speisewalze 10 mit nachfolgender Auflösewalze 9 (s. Fig. 2) oder ein Streckwerk beinhaltet. Im Fall einer Spulmaschine beinhaltet die Zufuhrvorrichtung 3 eine Ablaufspule. Weiterhin ist an jeder der Arbeitsstellen 2 eine Spulvorrichtung 5 zum Aufspulen eines Fasermaterials 7 auf eine Spule 27 vorgesehen. Die Spulvorrichtung 5 beinhaltet eine Fadenverlegeeinrichtung 19 mit einem Verlegefadenführer 18. Im Falle der hier gezeigten Spinnmaschine weist jede der Arbeitsstellen 2 weiterhin eine Spinneinheit 6, beispielsweise eine Rotorspinnvorrichtung oder eine Luftspinnvorrichtung, sowie eine Abzugsvorrichtung 4 zum Abziehen eines in der Spinneinheit 6 gesponnenen Fadens auf. Bei der hier gezeigten Spinnmaschine ist weiterhin als Arbeitsorgan eine Garnüberwachungseinrichtung 21 vorgesehen.

Zur Überprüfung von Arbeitsorganen der Arbeitsstellen 2 weist die Spinn- oder Spulmaschine 1 weiterhin einen Messkopf 13 mit einem Sensor 14 auf, welcher in einem entlang der Arbeitsstellen 2 verfahrbaren Servicewagen 12 angeordnet ist. Im vorliegenden Beispiel ist der Messkopf 13 an einem beweglichen Arm 15 angeordnet, sodass er zumindest einem der Arbeitsorgane, vorzugsweise aber auch mehreren Arbeitsorganen, zugestellt werden kann, wenn der Servicewagen 12 vor einer zu überprüfenden Arbeitsstelle 2 positioniert ist. Der Messkopf 13 kann jedoch auch gegenüber dem Servicewagen 12 unbeweglich an diesem angeordnet sein. Der Servicewagen 12 weist weiterhin eine Steuereinheit 23 auf, welche vorliegend eine Auswerteeinheit 22 zur Auswertung von Messwerten des Messkopfes 13 beinhaltet und welche mit einer Steuereinheit 23 der Spinn- oder Spulmaschine 1 in Verbindung steht.

Figur 2 zeigt eine Arbeitsstelle 2 eine Spinn- oder Spulmaschine 1 in einer schematischen Seitenansicht. Die Arbeitsstelle 2 ist vorliegend als Arbeitsstelle 2 einer Rotorspinnmaschine ausgebildet. Die Spinneinheit 6 weist einen in einem Rotorgehäuse rotierenden Spinnrotor 25 auf. Das Rotorgehäuse ist während des Betriebs mit einem Deckelelement 20 verschlossen, an welchem vorliegend zugleich eine Auflösewalze 9 sowie eine Speisewalze 10 als Zuführungsvorrichtung 3 angeordnet sind. Weiterhin ist in dieser Darstellung eine Garnführung 17 der Garnüberwachungseinrichtung 21 sowie eine Abzugswalze 11 und ein Druckroller 30 der Abzugsvorrichtung 4 erkennbar. Auch die Abzugswalze 11, die Garnführung 17, die Auflösewalze 9, die Speisewalze 10, das Deckelelement 20 sowie der Spinnrotor 25 stellen Arbeitsorgane der Arbeitsstelle 2 dar. Vorliegend sind der Verlegefadenführer 18, die Abzugswalze 11, die Garnführung 17, der Spinnrotor 25, das Deckelelement 20, die Auflösewalze 9 sowie die Speisewalze 10 jeweils mittels eines arbeitsstelleneigenen Einzelantriebs 16 angetrieben. Dabei stellen die Garnführung 17 und der Verlegefadenführer 18 Beispiele für oszillierend angetriebene Arbeitsorgane dar, während die Speisewalze 10, die Auflösewalze 9 und der Spinnrotor 25 Beispiele für drehbar angetriebene Arbeitsorgane sind. Zum Warten der Spinneinheit 6 kann das Deckelelement 20 aus seiner hier durchgezogen dargestellten, geschlossenen Stellung in seine hier strichpunktiert dargestellt, geöffnete Stellung überführt werden, was durch einen Pfeil symbolisiert ist. Das Deckelelement 20 ist somit ein Beispiel für ein Arbeitsorgan, welches aus einer ersten Endlage I in eine zweite Endlage II überführt werden kann. Weiterhin ist eine Steuereinheit 23 mit einer Auswerteeinheit 22 ersichtlich, welche entweder der Arbeitsstelle 2 oder der gesamten Spinn-oder Spulmaschine 1 zugeordnet sein kann.

Figur 3 zeigt die Arbeitsstelle 2 der Figur 2 während einer Überprüfung der Arbeitsstelle 2. Hierzu hat sich der verfahrbare Servicewagen 12 vor der Arbeitsstelle 2 positioniert. Zur Positionierung des Servicewagens 2 sind im Stand der Technik verschiedene Verfahren bekannt geworden, mittels welchen sichergestellt werden kann, dass der Servicewagen 12 und somit auch sämtliche Organe des Servicewagens 12 exakt und wiederholgenau zu der jeweiligen Arbeitsstelle 2 ausgerichtet sind. Im vorliegenden Beispiel weist der Servicewagen 12 zwei Messköpfe 13 auf. Ein erster Messkopf 13, welcher rechts innerhalb des Servicewagens 12 angeordnet ist, ist zur Überprüfung einer ersten Endlage I des Deckelelements 20 ausgebildet. Der Sensor 14 ist hierzu beispielsweise als optischer Abstandssensor ausgebildet, welcher ein Lichtsignal auswertet, wie durch die gepunktete Linie angedeutet.

Der Messkopf 13 ist vorliegend fest, d.h. unbeweglich gegenüber dem Servicewagen 12 an diesem angeordnet. In ausgezogenen Linien ist dabei das Deckelelement 20 in seiner vollständig geschlossenen Stellung bzw. der Endlage I gezeigt. Demgegenüber ist in strichpunktierten Linien in übertriebener Darstellung eine nicht vollständig geschlossene Stellung des Deckelelements 20 gezeigt. Wie der Figur entnehmbar, weist das Deckelement 20 in dieser Stellung einen kürzeren Abstand zu dem Messkopf 13 des Servicewagens 12 auf, was durch den Sensor 14 detektiert werden kann. Der zweite Messkopf 13, welcher links innerhalb des Servicewagens 12 angeordnet ist, ist hingegen zur Messung von Drehzahlen ausgebildet. Hierzu weist der Sensor 14 ein Reibrad 26 auf, welches dem zu messenden Arbeitsorgan zugestellt werden kann. Zum Zustellen an das Arbeitsorgan ist der Messkopf 13 an einem beweglichen Arm 15 angeordnet und aus einer Ruheposition R (strichpunktierte Linien) in eine Messposition M überführbar. Wie weiterhin durch mehrere punktierte Linien angedeutet, stehen die Sensoren 14 bzw. die Messköpfe 13 mit einer Steuereinheit 23 des Servicewagens 12 in Verbindung, welche wiederum mit der Steuereinheit 23 der Spinn- oder Spulmaschine 1 bzw. der Arbeitsstelle 2 in Verbindung steht.

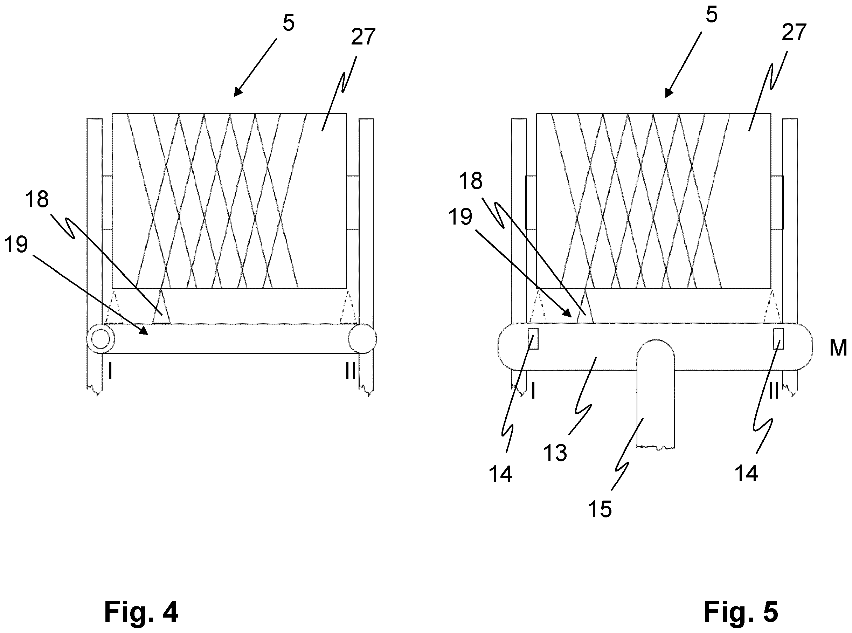

Figur 4 zeigt eine Spulvorrichtung 5 einer Arbeitsstelle 2 einer Spinn- oder Spulmaschine 1 in einer schematischen Vorderansicht während des regulären Betriebs. Die Spulvorrichtung 5 beinhaltet eine Fadenverlegeeinrichtung 19 mit einem Verlegefadenführer 18, welcher mittels eines Einzelantriebs 16 (siehe Figur 2) oszillierend zwischen zwei Endlagen I und II verfahrbar ist. Während die Endlagen I und II nicht korrekt erreicht, so wirkt sich dies auf den Spulenaufbau und somit die Qualität der Spule 27 aus.

Um nun zu überprüfen, ob der Verlegefadenführer 18 die Endlagen I und II tatsächlich erreicht, wird der Fadenverlegeeinrichtung 19 wiederum ein Messkopf 13 mit wenigstens einem Sensor 14 zugestellt. Dies ist in Figur 5 dargestellt. Wie der Figur entnehmbar, ist dabei für jede der Endlagen I und II ein eigener Sensor 14 vorgesehen. Um den Verlegefadenführer 18 bei Erreichen der Endlagen I und II detektieren zu können, könnten die Sensoren 14 beispielsweise als Induktivsensoren ausgebildet sein.

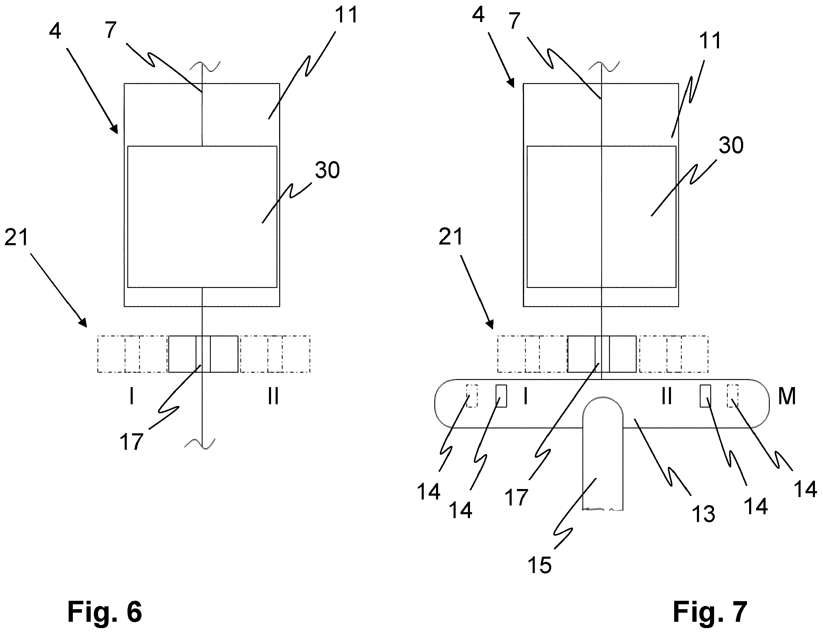

In ähnlicher Weise zeigt Figur 6 eine Garnüberwachungseinrichtung 21 einer Arbeitsstelle 2 in einer Vorderansicht während des regulären Betriebs. Die Garnüberwachungseinrichtung 21 weist eine Garnführung 17 auf und ist oszillierend zwischen zwei Endlagen I und II mittels eines Einzelantriebs 16 (siehe Figur 2) bewegbar. Die Garnüberwachungseinrichtung 21 dient der Detektion von Garnfehlern und ist unterhalb der Abzugsvorrichtung 4 mit der Abzugswalze 11 angeordnet. Durch die Changierbewegung der Garnführung 17 wird das abgezogene Fasermaterial 7, hier der Faden, auf der Oberfläche der Abzugswalze 11 und des ihr zugeordneten Druckrollers 30 hin und her bewegt. Ein Einlaufen in den Belag des Druckrollers 30 und die Oberfläche der Abzugswalze 11 kann hierdurch vermieden werden.

Figur 7 zeigt die Garnüberwachungseinrichtung 21 während der Überprüfung der Arbeitsstelle 2. Hierzu wurde der Garnüberwachungseinrichtung 21 ein Messkopf 13 zugestellt, der wie zu Figur 5 beschrieben jeweils zwei Sensoren 14 für die beiden Endlagen I und II aufweist. Der Messkopf 13 ist vorliegend in seiner Messposition M gezeigt. In strichpunktierter Darstellung sind zudem zwei weitere Sensoren 14 erkennbar. Diese können beispielsweise vorgesehen sein, um das Erreichen der beiden Endlagen I und II des zuvor beschriebenen Verlegefadenführers 18 zu detektieren. Es können somit mit einem einzigen Messkopf 13 nacheinander verschiedene Arbeitsorgane überprüft werden. Ebenso könnten jedoch auch mehrere Messköpfe an dem Servicewagen 12 angeordnet sein.

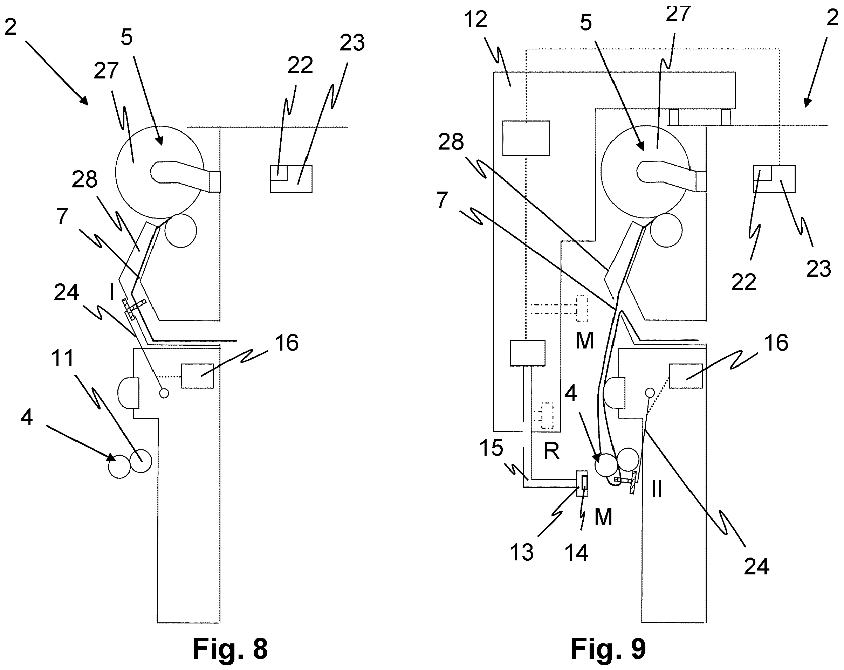

Figur 8 zeigt eine Arbeitsstelle einer Spinn- oder Spulmaschine 1 mit einem Fadenzubringer 24 in einer Fadenaufnahmestellung, welche zugleich eine erste Endlage I darstellt, in einer schematischen Seitenansicht. Mittels des Fadenzubringers 24 ist es möglich, ein nach einer Unterbrechung der Produktion auf die Spule 27 aufgelaufene Fadenende wieder in die Arbeitsorgane der Arbeitsstelle 2 einzulegen und/oder einer Anspinnvorrichtung (hier nicht gezeigt) zuzustellen. Vorliegend ist eine Situation gezeigt, in welcher das auf die Spule 27 aufgelaufene Fadenende (hier allgemein bezeichnet als Fasermaterial 7) bereits mittels einer Saugdüse 28 aufgesucht wurde und eingesaugt wurde. Der Fadenzubringer 24 befindet sich dabei in einer Fadenaufnahmestellung, welche zugleich seine erste Endlage I darstellt. In dieser verläuft das Fasermaterial 7 durch eine Öse des Fadenzubringers 24.

Figur 9 zeigt den Fadenzubringer 24 in einer Fadenübergabestellung, welche zugleich seine zweite Endlage II darstellt. Der Fadenzubringer 24 wurde hierzu in an sich bekannter Weise unter Bildung einer Fadenschlaufe nach unten geschwenkt. Der Fadenzubringer 24 ist ebenfalls mittels eines Einzelantriebs 16, meist eines Schrittmotors, bewegbar. Aufgrund verschiedener Einflüsse kann es dazu kommen, dass die Fadenaufnahmestellung und/oder die Fadenübergabestellung nicht korrekt erreicht werden. Dies kann ebenfalls mittels eines oder ggf. auch mehrerer Messköpfe 13 eines verfahrbaren Servicewagens 12 überprüft werden. Vorliegend ist hierzu an dem Servicewagen 12 ein Messkopf 13 aus einer Ruheposition R (erste strichpunktierte Darstellung im unteren Bereich des Servicewagens 12) in eine erste Messposition M überführbar, in welcher er das Erreichen der zweiten Endlage II des Fadenzubringers 24 überprüfen kann. Außerdem ist der Messkopf 13 in eine zweite Messposition M (zweite strichpunktierte Darstellung im mittleren Bereich des Servicewagens 12) überführbar, in welcher das Erreichen der ersten Endlage I des Fadenzubringers 24 überprüft werden kann.

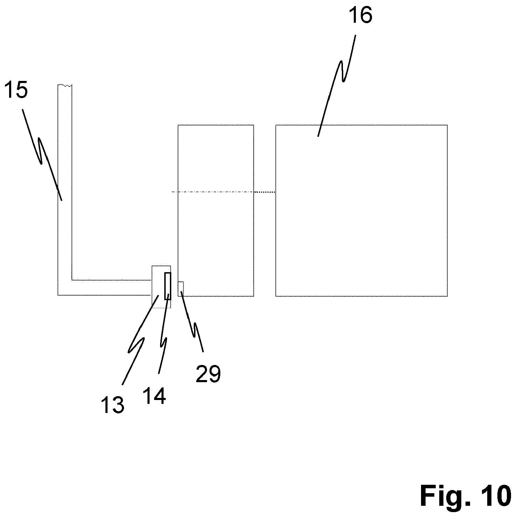

Figur 10 zeigt eine schematische Ansicht eines Arbeitsorgans einer Arbeitsstelle 2 einer Spinn- oder Spulmaschine 1 mit einem daran zugestellten Messkopf 13. Das Arbeitsorgan ist mittels eines Einzelantriebs 16 angetrieben. Der Messkopf 13 ist wiederum an einem beweglichen Arm 15 angeordnet. Zur Erfassung von Drehzahlen wurde in Figur 3 bereits beschrieben, dass dies mittels eines Reibrades 26 erfolgen kann. Alternativ ist es auch möglich, eine Drehzahlerfassung mittels eines optischen Sensors 14 oder eines induktiven Sensors 14 vorzunehmen. Dabei ist es auch denkbar, ohnehin vorhandene Strukturen der rotierenden Arbeitsorgane zu erfassen. Beispielsweise könnte bei einer Abzugswalze 11, welche in der Regel mit einer Riffelung über ihre Oberfläche versehen ist, die Riffelung zur Erfassung von Drehzahlen herangezogen werden.

Ist dies nicht möglich, so kann auch eine Markierung 29 oder auch ein Magnet an dem rotierenden Arbeitsorgan angebracht werden. Dies ist in Figur 10 dargestellt. Die Markierung 29 könnte im einfachsten Fall einen Klebepunkt beinhalten, welcher bei jeder Umdrehung mittels des Sensors 14 erfasst wird. Ebenso wäre eine Farbmarkierung möglich. In derselben Weise könnte auch der Einzelantrieb 16 mit einer entsprechenden Markierung versehen werden.

Die vorliegende Erfindung ist nicht auf die dargestellten und beschriebenen Ausführungsbeispiele beschränkt. Abwandlungen im Rahmen der Patentansprüche sind ebenso möglich wie eine beliebige Kombination der beschriebenen Merkmale, auch wenn sie in unterschiedlichen Teilen der Beschreibung bzw. den Ansprüchen oder in unterschiedlichen Ausführungsbeispielen dargestellt und beschrieben sind, vorausgesetzt, dass kein Widerspruch zur Lehre der unabhängigen Ansprüche entsteht.

### Bezugszeichenliste

- 1: Spinn- oder Spulmaschine
- 2: Arbeitsstelle
- 3: Zuführvorrichtung
- 4: Abzugsvorrichtung
- 5: Spulvorrichtung
- 6: Spinneinheit
- 7: Fasermaterial
- 8 9: Auflösewalze
- 10: Speisewalze
- 11: Abzugswalze
- 12: Servicewagen
- 13: Messkopf
- 14: Sensor
- 15: Arm
- 16: Einzelantrieb
- 17: Garnführung
- 18: Verlegefadenführer
- 19: Fadenverlegeeinrichtung
- 20: Deckelelement
- 21: Garnüberwachungseinrichtung
- 22: Auswerteeinheit
- 23: Steuereinheit
- 24: Fadenzubringer
- 25: Spinnrotor
- 26: Reibrad
- 27: Spule

- 28: Saugdüse
- 29: Markierung
- 30: Druckroller

- I: erste Endlage
- II: zweite Endlage
- R: Ruheposition
- M: Messposition

## Patentansprüche

1. Spinn- oder Spulmaschine (1) mit einer Vielzahl nebeneinander angeordneter Arbeitsstellen (2), wobei die Arbeitsstellen (2) als zumindest teilautarke Arbeitsstellen (2) ausgebildet sind, welche zumindest nach Bereitstellung eines Fadenendes einen Fadenverbindungsvorgang selbstständig durchführen können und welche jeweils wenigstens ein arbeitsstelleneigenes, mittels eines Einzelantriebs (16) aus einer ersten Endlage (I) in eine zweite Endlage (II) überführbares Arbeitsorgan zur Handhabung eines Fasermaterials (7) aufweisen, **dadurch gekennzeichnet, dass** die Spinn- oder Spulmaschine (1) einen Messkopf (13) mit wenigstens einem Sensor (14) aufweist, welcher einer zu überprüfenden Arbeitsstelle (2) zustellbar ist und mittels welchem das Erreichen wenigstens einer der beiden Endlagen (I, II) des wenigstens einen Arbeitsorgans der zu überprüfenden Arbeitsstelle (2) detektierbar ist, und dass der Messkopf (13) in einem entlang der Arbeitsstellen (2) verfahrbaren Servicewagen (12) angeordnet ist.

2. Spinn- oder Spulmaschine (1) nach dem vorherigen Anspruch, **dadurch gekennzeichnet, dass** das Arbeitsorgan ein Deckelelement (20) ist, welches aus einer geschlossenen Stellung in eine geöffnete Stellung überführbar ist, wobei mittels des Sensors (14) das Erreichen wenigstens der geschlossenen Stellung detektierbar ist.

3. Spinn- oder Spulmaschine (1) nach einem der vorherigen Ansprüche, **dadurch gekennzeichnet, dass** das Arbeitsorgan ein oszillierend zwischen den beiden Endlagen (I, II) bewegbarer Fadenführer, insbesondere eine Garnführung (17) einer Garnüberwachungseinrichtung oder ein Verlegefadenführer (18) einer Fadenverlegeeinrichtung (19) ist.

4. Spinn- oder Spulmaschine (1) nach einem der vorherigen Ansprüche, **dadurch gekennzeichnet, dass** das Arbeitsorgan ein schwenkbar an der Arbeitsstelle (2) angeordneter Fadenzubringer (24) ist, welcher aus einer Fadenaufnahmestellung in eine Fadenübergabestellung überführbar ist.

5. Spinn- oder Spulmaschine (1) nach einem der vorherigen Ansprüche, **dadurch gekennzeichnet, dass** der Sensor (14) als Abstandssensor ausgebildet ist.

6. Spinn- oder Spulmaschine (1) nach einem der vorherigen Ansprüche, **dadurch gekennzeichnet, dass** der Sensor (14) als Näherungsschalter, insbesondere als induktiver oder kapazitiver Näherungsschalter, ausgebildet ist.

7. Spinn- oder Spulmaschine (1) mit einer Vielzahl nebeneinander angeordneter Arbeitsstellen (2), wobei die Arbeitsstellen (2) als zumindest teilautarke Arbeitsstellen (2) ausgebildet sind, welche zumindest nach Bereitstellung eines Fadenendes einen Fadenverbindungsvorgang selbstständig durchführen können und welche jeweils wenigstens ein arbeitsstelleneigenes, mittels eines Einzelantriebs (16) drehbar und/oder oszillierend antreibbares Arbeitsorgan zur Handhabung eines Fasermaterials (7) aufweisen, **dadurch gekennzeichnet, dass** die Spinn-oder Spulmaschine (1) einen Messkopf (13) mit einem Sensor (14) aufweist, welcher einer zu überprüfenden Arbeitsstelle zustellbar ist und mittels welchem eine Drehzahl und/oder eine Geschwindigkeit und/oder eine Beschleunigung des wenigstens einen Arbeitsorgans der zu überprüfenden Arbeitsstelle (2) messbar ist, und dass der Messkopf (13) in einem entlang der Arbeitsstellen (2) verfahrbaren Servicewagen (12) angeordnet ist.

8. Spinn- oder Spulmaschine (1) nach dem vorherigen Anspruch, **dadurch gekennzeichnet, dass** das Arbeitsorgan eine Speisewalze (10) oder eine Abzugswalze (11) einer Abzugsvorrichtung (4) oder ein Spinnrotor (25) ist.

9. Spinn- oder Spulmaschine (1) nach einem der vorherigen Ansprüche, **dadurch gekennzeichnet, dass** der Sensor (14) ein Drehgeber ist.

10. Spinn- oder Spulmaschine (1) nach einem der vorherigen Ansprüche, **dadurch gekennzeichnet, dass** der Sensor (14) ein optischer Sensor (14) ist.

11. Spinn- oder Spulmaschine (1) nach einem der vorherigen Ansprüche, **dadurch gekennzeichnet, dass** der Messkopf (13) beweglich an dem Servicewagen (12) angeordnet ist und aus einer Ruheposition (R) in eine Messposition (M) überführbar ist und/oder dass der Messkopf (13) verschiedenartigen Arbeitsorganen der zu überprüfenden Arbeitsstelle(n) (2) zustellbar ist.

12. Spinn- oder Spulmaschine (1) nach einem der vorherigen Ansprüche, **dadurch gekennzeichnet, dass** die Spinn- oder Spulmaschine (1) eine Auswerteeinheit (22) zur Auswertung von Messwerten des Messkopfes (13) aufweist.

13. Spinn- oder Spulmaschine (1) nach einem der vorherigen Ansprüche, **dadurch gekennzeichnet, dass** die Arbeitsstelle (2) als vollautarke Arbeitsstelle (2) einer Spinnmaschine ausgebildet ist und zumindest eine einzeln angetriebene Zuführvorrichtung (3) für ein Fasermaterial (7), eine einzeln antreibbare und/oder einzeln betätigbare Spinneinheit (6), eine einzeln antreibbare Abzugsvorrichtung (4) für einen gesponnenen Faden sowie eine einzeln antreibbare Spulvorrichtung (5) aufweist.

14. Verfahren zum Betreiben einer Spinn- oder Spulmaschine (1) mit einer Vielzahl nebeneinander angeordneter Arbeitsstellen (2), wobei die Arbeitsstellen (2) als zumindest teilautarke Arbeitsstellen (2) ausgebildet sind, welche zumindest nach Bereitstellung eines Fadenendes einen Fadenverbindungsvorgang selbstständig durchführen können und welche jeweils wenigstens ein arbeitsstelleneigenes, mittels eines Einzelantriebs (16) aus einer ersten Endlage (I) in eine zweite Endlage (II) überführbares Arbeitsorgan zur Handhabung eines Fasermaterials (7) aufweisen, **dadurch gekennzeichnet, dass** das Erreichen wenigstens einer der beiden Endlagen (I, II) des wenigstens einen Arbeitsorgans einer zu überprüfenden Arbeitsstelle (2) mittels eines entlang der Arbeitsstellen (2) verfahrbaren Servicewagens (12) überprüft wird, wobei dem wenigsten einen Arbeitsorgan der zu überprüfenden Arbeitsstelle (2) ein Messkopf (13) des Servicewagens (12) mit einem Sensor (14) zugestellt wird.

15. Verfahren zum Betreiben einer Spinn- oder Spulmaschine (1) mit einer Vielzahl nebeneinander angeordneter Arbeitsstellen (2), wobei die Arbeitsstellen (2) als zumindest teilautarke Arbeitsstellen (2) ausgebildet sind, welche zumindest nach Bereitstellung eines Fadenendes einen Fadenverbindungsvorgang selbstständig durchführen können und welche jeweils wenigstens ein arbeitsstelleneigenes, mittels eines Einzelantriebs (16) drehbar und/oder oszillierend antreibbares Arbeitsorgan zur Handhabung eines Fasermaterials (7) aufweisen, **dadurch gekennzeichnet, dass** eine Drehzahl und/oder eine Geschwindigkeit und/oder eine Beschleunigung des wenigstens einen Arbeitsorgans einer zu überprüfenden Arbeitsstelle (2) gemessen wird, wobei dem wenigsten einen Arbeitsorgan der zu überprüfenden Arbeitsstelle (2) ein Messkopf (13) des Servicewagens (12) mit einem Sensor (14) zugestellt wird.

16. Verfahren nach einem der beiden vorherigen Ansprüche, **dadurch gekennzeichnet, dass** der Messkopf (13) zum Zustellen an das wenigstens eine Arbeitsorgan aus einer Ruheposition (R) in eine Messposition (M) überführt wird.
